# EUROPEAN PATENT SPECIFICATION

(11) **EP 2 799 378 B1**
(45) Date of publication and mention of the grant of the patent: **18.09.2019**
(21) Application number: 12862159.6
(22) Date of filing: 27.12.2012
(51) Int. Cl.: B65H 18/10, B65H 23/025, B65H 27/00, B65H 23/195, B65H 18/26, B29D 99/00, B29L 31/00

(54) **MANUFACTURING DEVICE AND MANUFACTURING METHOD FOR MICROPOROUS PLASTIC FILM ROLL**
HERSTELLUNGSVORRICHTUNG UND HERSTELLUNGSVERFAHREN FÜR MIKROPORÖSE FOLIENROLLE
DISPOSITIF DE FABRICATION ET PROCÉDÉ DE FABRICATION POUR CYLINDRES DE FILM PLASTIQUE MICROPOREUX

(30) Priority: 27.12.2011 JP 2011285999
(43) Date of publication of application: 05.11.2014
(73) Proprietor: Toray Industries, Inc., Tokyo 103-8666 (JP)
(72) Inventor: ICHINOMIYA, Takashi, Otsu-shi Shiga 520-8558 (JP); IIZUKA, Takanori, Nasushiobara-shi Tochigi 329-2763 (JP); KANEKO, Kenji, Nasushiobara-shi Tochigi 329-2763 (JP)
(74) Representative: Hoefer & Partner Patentanwälte mbB
(86) International application number: PCT/JP2012/083904
(87) International publication number: WO 2013/100062

(56) References cited:
- EP-A1- 0 401 886
- WO-A1-2009/123015
- JP-A- H0 682 388
- JP-A- S59 212 347
- JP-A- 2001 063 884
- JP-A- 2001 063 884
- JP-A- 2006 176 308
- JP-A- 2008 081 274
- JP-Y2- H0 714 287
- US-A- 3 741 663
- US-A- 3 812 348
- US-A- 5 039 023
- US-A- 5 437 417
- US-A- 6 125 754
- US-A1- 2007 090 227
- US-A1- 2007 228 607

## Description

### Field

The present invention relates to an apparatus and a method for manufacturing a microporous plastic film roll.

### Background

There have often been cases where pinholes existing in various films cause quality problems. As described in Non Patent Literature 1, for example, because pinholes in food packaging films may cause troubles such as liquid leakage from contents, the Food Sanitation Law stipulates testing methods of sticking, friction, flex fatigue, and the like so as to prevent pinholes from being created during film manufacturing processes.

Because pinholes in separators for film capacitors and batteries cause insulation failure, efforts have been made to thoroughly perform pinhole fault inspection before shipping and to thoroughly perform in-process dustproof management.

An apparatus has been developed that rewinds resin films for use in electric circuit component materials and magnetic tape materials with a flat metal surface of conveying rolls. This prevents circumferential speed changes with time and reduces friction resistance, thereby reducing the occurrence of scratches on resin films (refer to Patent Literature 1, for example).

### Citation List

### Patent Literature

Patent Literature 1: Japanese Patent Application Laid-open No. 2001-63884

### Non Patent Literature

Non Patent Literature 1: Hiroshi Osuga, "Film Molding, Processing, and Handling", the first edition, Technical Information Institute Co., Ltd, September 2002, p. 222. Further prior art apparatuses and methods for winding were disclosed in the documents US 5,437,417, US 2007/0090227 A1, US 5,039,023, and JP 2001 063884, the latter being considered to illustrate the closest prior art.

### Summary

### Technical Problem

However, although the technology disclosed in Non Patent Literature 1 is effective to a certain extent for preventing shipment of products with pinholes found by inspection, it does not reduces pinholes themselves, resulting in no direct improvement in productivity. Because the film manufacturing process has a long conveyance distance, downstream processes have a higher risk of causing pinholes by foreign bodies, thus limiting a dustproof effect despite strict management of dust proofing.

Because the surface of the conveying rollers disclosed in Patent Literature 1 is uniformly flat, a decrease in gripping force caused by air lubrication has induced unfavorable film meandering. In particular, when air permeability is not negligible as seen in plastic films having micropores, the relation between gripping force and the characteristics of the surface of the conveying rollers before and after air permeation is complex, and there has been a risk that conveyability may be unfavorable because of the occurrence of meandering in such conveying rolls having a uniformly flat metallic surface as disclosed in Patent Literature 1.

Patent Literature 1 states that rubber may be used for the surface of a nip roller existing in the conveying process of a resin film, because the apparatus did not originally intend to prevent pinhole faults from occurring. When the conveying rollers have uniformly flat metallic surfaces as Patent Literature 1, the nip roller requires a gripping force to make itself a starting point for controlling speed and tension. For this reason, in order to produce gripping uniformly in the width direction, when the conveying rollers are made of metal, the surface of the nip roller must be made of rubber exemplified in Patent Literature 1. However, such a nip roller has had a risk that foreign bodies such as metallic powder generated during a conveyance process may stick therein, and because of the nature of the nip roller, there has been a risk that the stuck foreign bodies may produce pinhole faults in the film.

In view of the above circumstances, an object of the present invention is to provide an apparatus and a method for manufacturing a microporous plastic film that can reduce the occurrence of pinhole faults and can convey a plastic film favorably.

### Solution to Problem

To achieve the object, in an apparatus according to the present invention for manufacturing a microporous plastic film roll by conveying a plastic film having micropores by conveying rollers and then winding the plastic film in a roll shape while being brought into contact with a touch roller, a part of the touch roller to be in contact with the plastic film has a Vickers hardness of 100 to 2,000, and the plastic film is conveyed so that a side of the plastic film opposite the side being in contact with the conveying rollers is in a noncontact state in a range being in contact with the conveying rollers. The "plastic film having micropores" refers to a polymer thin film body having many micropores within the film, in which some of or all the micropores are through holes. The "conveying rollers" refer to units that convey a longitudinally continuous microporous plastic film from the upstream to the downstream of a manufacturing process and refer to cylindrical bodies that are rotatably supported. The "touch roller" refers to a roller that rotates while pressing a film roll and is used to adjust wound appearance by excluding air within the film roll and reducing high edges. A non-claimed "near roller" refers to a roller that comes into contact with the plastic film to convey the plastic film and is used to adjust the wound appearance by reducing an air travel distance of the film as much as possible by approaching to the film roll, although it neither comes into contact with nor presses the film unlike the touch roller.

Moreover, in the apparatus for manufacturing a microporous plastic film roll according to the present invention, a film contact part of one or more of at least one of the conveying rollers and the touch roller to be in contact with the plastic film has a Vickers hardness of 100 to 2,000. a film contact part of at least one of the conveying rollers has an arithmetic average roughness Ra of 1.2 µm to 15 µm. The "Vickers hardness" is an indicator indicating the hardness of an object surface stipulated in Japanese Industrial Standards JIS Z2244.

Moreover, in an apparatus for manufacturing a microporous plastic film roll not covered by the present invention, a film contact part of one or more of at least one of the conveying rollers and the near roller to be in contact with the plastic film has on a surface thereof grooves whose width is 0.5 to 3 mm and has a Vickers hardness of 100 to 2,000. The "groove" refers to a continuous recess intentionally formed on the surface of the conveying rollers.

Moreover, the apparatus for manufacturing a microporous plastic film roll according to the present invention includes a pinhole fault detector that detects a pinhole in a plastic film conveyed, wherein a film contact part of at least one of the conveying rollers, the near roller (not covered by the invention) and the touch roller on a downstream side of the pinhole fault detector in a conveyance direction to be in contact with the plastic film has an arithmetic average roughness of 1.2 µm to 15 µm and has a Vickers hardness of 100 to 2,000. The "pinhole fault detector" refers to a unit that detects pinhole faults that are present within the microporous plastic film or on the surface thereof and are large enough to lead to insulation failure in the use of batteries or the like.

Moreover, in the apparatus for manufacturing a microporous plastic film roll according to the present invention, the film contact part is of metal or ceramics. The "ceramics" refers to a sintered body containing a metal oxide as the main component.

Moreover, the apparatus for manufacturing a microporous plastic film roll according to the present invention includes a wrinkle removing unit that is in contact with only edges of the plastic film conveyed to remove wrinkles formed on the plastic film in a conveyance process. The "wrinkle removing unit" refers to a unit that, when the microporous plastic film is conveyed in the longitudinal direction, produces a conveying force also in the width direction or conveys the film in the width direction, thereby, even when wrinkles occur in the film, removing the wrinkles or preventing wrinkles from occurring.

Moreover, the apparatus for manufacturing a microporous plastic film roll according to the present invention includes a wrinkle removing unit that is in contact with a full width of the plastic film conveyed to remove wrinkles formed on the plastic film in a conveyance process, wherein a part of the wrinkle removing unit to be in contact with the plastic film is of metal.

Moreover, a method for manufacturing a microporous plastic film roll according to the present invention includes: conveying a plastic film having micropores whose air permeability is 10 to 1,000 seconds/100 ml by conveying rollers; and winding, after the conveying, the plastic film in a roll shape while being brought into contact with a touch roller, wherein a part of the touch roller to be in contact with the plastic film has a Vickers hardness of 100 to 2,000, and the plastic film is conveyed so that a side of the plastic film opposite the side being in contact with the conveying rollers is in a noncontact state in a range being in contact with the conveying rollers, the conveying rollers having a Vickers hardness of 100 to 2,000 µm, and an arithmetic average roughness Ra of 1.2 µm to 15 µm. The "air permeability" refers to an indicator that determines a time during which, when a predetermined pressure is applied to a microporous film such as paper stipulated in Japanese Industrial Standards JIS P8117, a predetermined amount of air passes through micropores.

Moreover, in a method for manufacturing a microporous plastic film roll not covered by the present invention, a film contact part of one or more of at least one of the conveying rollers and the near roller to be in contact with the plastic film has a Vickers hardness of 100 to 2,000 and an arithmetic average roughness of 1.2 µm to 15 µm.

### Advantageous Effects of Invention

According to the present invention, a plastic film is conveyed so that a side of the plastic film opposite the side being in contact with the conveying rollers is in a noncontact state in a range being in contact with the conveying rollers, thereby eliminating a risk that sharp foreign bodies may stick in the conveying rollers and reducing the creation of pinholes by foreign bodies stuck in the surface of the conveying rollers as compared to a case of using a conventional nip roller. The present invention therefore has the effects of reducing the occurrence of pinhole faults and conveying the plastic film favorably.

When using the touch roller, the part of the touch roller to be in contact with the plastic film has a Vickers hardness of 100 to 2,000, thereby eliminating a risk that sharp foreign bodies such as metallic dust may stick in the part to be in contact with the plastic film and preventing many pinholes from being created periodically in the plastic film.

A film contact part of one or more of at least one of the conveying rollers and the near roller (not covered by the invention) to be in contact with the plastic film has a Vickers hardness of 100 to 2,000, thereby eliminating a risk that sharp foreign bodies such as metallic dust may stick in the part to be in contact with the plastic film and preventing many pinholes from being created periodically in the plastic film.

The film contact part has an arithmetic average roughness Ra of 1.2 µm to 15 µm, thereby preventing the plastic film from meandering.

### Brief Description of Drawings

FIG. 1 is a schematic side view of a conveying and winding unit as the main part of an apparatus for manufacturing a microporous plastic film roll as an embodiment according to the present invention.
FIG. 2 is an enlarged plan view illustrating an example of a microporous plastic film.
FIG. 3 is an enlarged cross section of the microporous plastic film illustrated in FIG. 2.
FIG. 4 illustrates a use of a microporous plastic film roll manufactured by the apparatus for manufacturing a microporous plastic film roll illustrated in FIG. 1 and is an illustrative diagram that schematically explodes a part of a cylindrical lithium-ion secondary battery.
FIG. 5 is an enlarged longitudinal sectional view illustrating a pinhole created in a microporous plastic film.
FIG. 6 is an illustrative diagram schematically illustrating the surface of a near roller illustrated in FIG. 1.
FIG. 7 is an illustrative diagram of a case in which conveying a microporous plastic film by a roller whose film contact part is a mirror-finished surface and is formed of metal or ceramics.
FIG. 8 is a schematic side view of a conveying and winding unit as the main part of an apparatus for manufacturing a microporous plastic film roll as a modification of the embodiment according to the present invention.
FIG. 9 is an illustrative diagram illustrating another modification of the apparatus for manufacturing a microporous plastic film roll as the present embodiment.
FIG. 10 is a schematic plan view of FIG. 9.
FIG. 11 is a table listing the evaluation results of Examples 1 to 11 and Comparative Examples 1 and 2. Description of Embodiments

The following describes preferred embodiments of an apparatus and a method for manufacturing a microporous plastic film roll according to the present invention in detail with reference to the attached drawings.

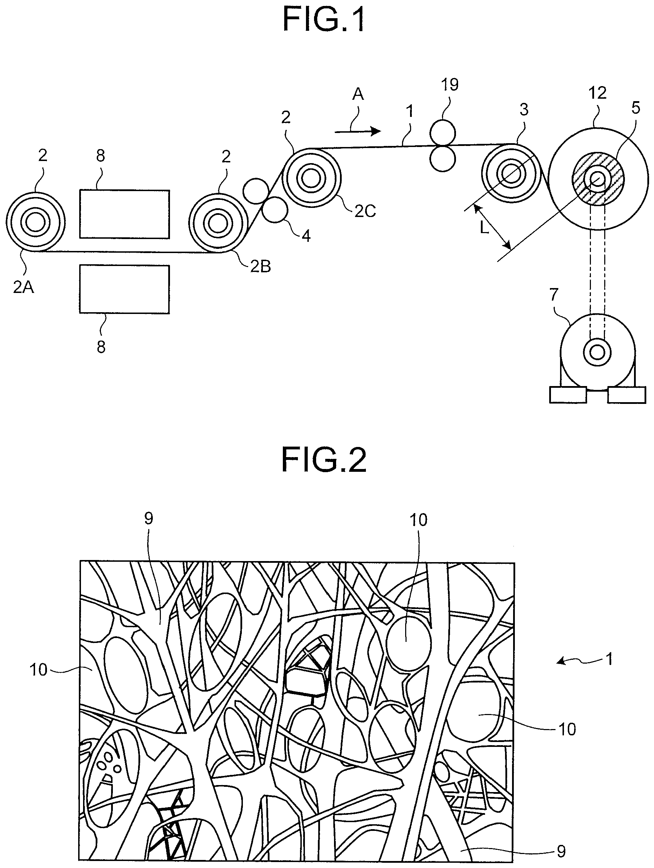

FIG. 1 is a schematic side view of a conveying and winding unit as the main part of an apparatus for manufacturing a microporous plastic film roll as an embodiment according to the present invention.

A microporous plastic film 1 to be conveyed by this apparatus for manufacturing a microporous plastic film roll exemplified in the drawing may be formed by any method. The microporous plastic film 1 is preferably formed by kneading a molten polyolefin resin with a solvent in an extruder, discharging the resin from a die onto a cooling drum to form a gel sheet, subjecting it to a stretch orientation process as needed, and washing and drying the solvent. The microporous plastic film 1 may also be formed by forming micropores by discharging a polyolefin resin kneaded with a crystal nucleating agent onto a cooling drum and performing crystal structure control without using any solvent. The microporous plastic film 1 may also be formed by combining a heat-resistant polymer such as polyamides and polyimides and solvents having different compatibility to form micropores and discharging or coating. A heat-resistant coating may be applied to one side or both sides of the microporous plastic film 1 made of the polyolefin resin so long as the air permeability of the micropores is maintained. The microporous plastic film 1 may also be formed as a stacked body of synthetic resin like paper or nonwoven cloth.

The thus obtained microporous plastic film 1 is preferably stretched monoaxially or biaxially as needed in order to achieve the control and strength of its porous structure.

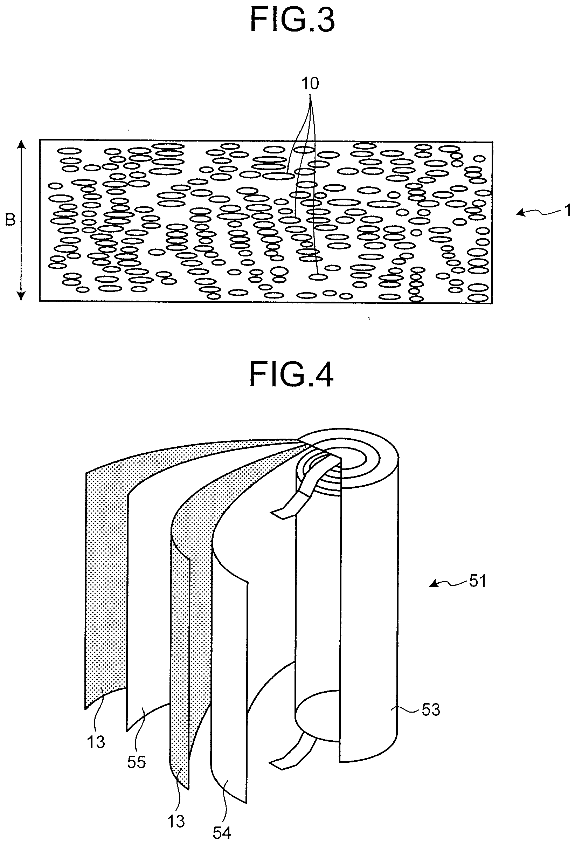

FIG. 2 is an enlarged plan view illustrating an example of the microporous plastic film 1, whereas FIG. 3 is an enlarged cross section of the microporous plastic film 1 illustrated in FIG. 2. As illustrated in FIG. 2 and FIG. 3, the micropores of the microporous plastic film 1 may be formed by any means. When the microporous plastic film 1 is formed by stretch orientation, a resin layer around the pores is fibrous trunk as illustrated in the drawing, which may be called fibril 9. Some of or all the micropores surrounded by the fibril 9 function as through holes 10. Although the through holes 10 do not seem to pass through in the thickness direction B at a glance, the micropores exemplified in FIG. 3 form a three-dimensional network structure and pass through in a curved manner. Thus, a certain section taken may not seem to pass through at a glance as in FIG. 3. This is an example of a structure suitable to prevent insulation failure and allow an ionic electrolyte solution to pass through when used as separators for batteries and capacitors.

An average diameter of the pores suitable to a separator is several hundreds of nanometers to several micrometers and more preferably about 0.01 µm to 1 µm. These are dimensions that constitute ion transmission resistance important as battery performance. Other than the average pore diameter, the thickness of the microporous plastic film 1 is another important parameter that constitutes the transmission resistance, which is preferably 3 µm to 50 µm. As means for indirectly measuring the ion transmission resistance, it is important that the air permeability stipulated in Japanese Industrial Standards JIS P8117 is within a range of 10 to 1,000 seconds/100 ml.

FIG. 4 illustrates a use of a microporous plastic film roll manufactured by the apparatus for manufacturing a microporous plastic film roll illustrated in FIG. 1 and is an illustrative diagram that schematically explodes a part of a cylindrical lithium-ion secondary battery.

As illustrated in FIG. 4, a microporous plastic film roll manufactured by the apparatus for manufacturing a microporous plastic film roll as the embodiment according to the present invention is used to this cylindrical lithium-ion secondary battery 51 and is used as a separator 13 that prevents a short circuit between electrodes, that is, a positive electrode 54 and a negative electrode 55 inside a case 53.

The inside of the case 53 is filled with a lithium-ion electrolyte solution. The separator 13 requires permeability for ions in the electrolyte solution as well as insulating performance. Suitable to the purpose is the microporous plastic film roll manufactured by the apparatus for manufacturing a microporous plastic film roll as the embodiment according to the present invention.

The apparatus for manufacturing a microporous plastic film roll as the embodiment according to the present invention includes, as exemplified in FIG. 1, a plurality of conveying rollers 2 and a winding core 5, a cutting unit 4, a pinhole fault detector 8, and a wrinkle removing unit 19.

The conveying rollers 2 convey the microporous plastic film 1 at a predetermined speed in the direction of the arrow A. These conveying rollers 2 are rotatingly driven by a driving source such as a motor (not illustrated) through a drive transmission unit such as a belt or a chain. Not all the conveying rollers 2 are necessarily required to be driven, and they can assist as an idler the conveyance of the microporous plastic film 1 so long as they are rotatably supported by a bearing. In this case, when it is desired to avoid flaws and abrasion powder of the microporous plastic film 1, it is preferable to reduce the friction loss of the bearing.

The winding core 5 rotates about its own central shaft by a driving source 7 such as a motor while being rotatably supported by a winding shaft or a chuck and winds up the microporous plastic film 1 passed through a near roller 3 with a predetermined tension as a film roll 12. In order to wind the film roll 12 with its edge face aligned without any wrinkle, it is important to give a predetermined tension. In this case, the tension of the microporous plastic film 1 may be controlled by controlling the torque of the driving source 7 such as a motor. Alternatively, the tension may be controlled by such means, including a dancing roller and an air floater, that presses the film to give a tension arranged in a part of the upstream conveying process while controlling the speed of the driving source 7. Because the microporous plastic film 1 is relatively easily broken, and the pores are likely to be crushed, it is preferable to set the tension value to be lower than that of general pore-free films; the value is preferably 1 N/m to 50 N/m. When the tension value is less than 1 N/m, wrinkles occur, or the film slacks because of the planarity of the film. In addition, the tension control of the machine is remarkably impaired due to the friction of the drive unit. When the tension value exceeds 50 N/m, break and crush easily occur as described above.

More preferably, specifying the tension to be within a range of 1 N/m to 30 N/m can prevent the occurrence of break and wrinkles more effectively while performing the tension control of the machine with appropriate accuracy.

The near roller 3 is a roller arranged close to the film roll 12 as illustrated in FIG. 1 and is used for adjusting its wound appearance by reducing tension variations and preventing wrinkles by reducing an air travel distance L of the microporous plastic film 1 as much as possible.

The air travel distance L of the microporous plastic film 1 illustrated in FIG. 1 is the distance between respective contact points of the near roller 3 and the film roll 12. The respective contact points are points at which a film path and lines drawn from the centers of the near roller 3 and the film roll 12 cross each other. The air travel distance L is preferably about 5 mm to 150 mm. When the distance is less than 5 mm, the film roll 12 and the near roller 3 may come into contact with each other due to their wobbling. When the distance exceeds 150 mm, the original wound appearance adjusting functions such as prevention of tension variations degrade remarkably. The air travel distance L is more preferably about 5 mm to 50 mm.

The cutting unit 4 is arranged between a conveying roller 2B and a conveying roller 2C in FIG. 1. The cutting unit 4 cuts the microporous plastic film 1 into a necessary width (e.g., a width of several tens of millimeters to several hundreds of millimeters) in accordance with the sizes of final products when used for batteries, capacitors, and the like. In particular, in order for a film having a high porosity rate and low toughness in the microporous plastic film 1 to be efficiently cut, the cutting unit 4 is preferably, but not limited to, shear cutting that introduces a film into between an upper blade and a lower blade and cuts it by giving shearing like scissors as illustrated in FIG. 1. Other examples include score cutting that presses a blade against a hard metallic roller or ceramics roller to cut a film and a razor blade that cuts a film in the air or on a groove formed in a roller. High-energy particles or radiation such as a laser may be applied to a film to cut it, although the cut section becomes slightly humped.

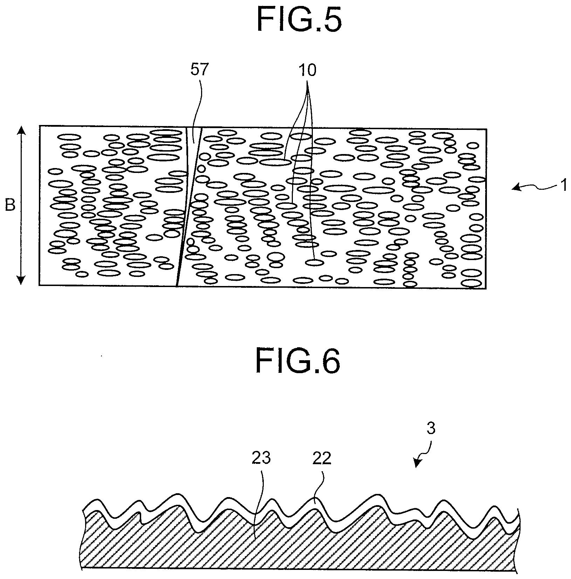

The pinhole fault detector 8 is arranged between a conveying roller 2A and the conveying roller 2B. This pinhole fault detector 8 detects a pinhole 57 formed in the microporous plastic film 1 conveyed as illustrated in FIG. 5. The pinhole 57 is created for various reasons. For example, when rubber having a high friction coefficient is used for a part of members constituting a conveying unit that conveys the microporous plastic film 1, if a sharp foreign body such as metallic dust is stuck in the rubber, it may create a pinhole. It is unfavorable to use a film having many pinholes 57 for the separator 13 of the battery illustrated in FIG. 4 or a capacitor, because there is a risk that insulation failure may occur with the pinhole 57 as a starting point, leading to unintentional heat generation from the battery.

In particular, when the air permeability of the microporous plastic film 1 is 10 to 1,000 seconds/100 ml, the average pore diameter of the micropores is several hundreds of nanometers to several micrometers. In contrast, the size of the pinhole 57 caused by a foreign body is generally as large as several tens of micrometers to several millimeters; a large current passes, because ion permeation is larger only at that part, which is likely to cause the heat generation of the battery described above.

The wrinkle removing unit 19 is arranged on the downstream side of the cutting unit 4 in the conveyance direction and is arranged between the conveying roller 2C and the near roller 3 in FIG. 1. This wrinkle removing unit 19 removes wrinkles formed on the microporous plastic film 1 by pinch rollers called a cross guider that are installed slightly tilted with respect to the travel direction of the microporous plastic film 1 on both edges of the microporous plastic film 1. The reason why the wrinkle removing unit 19 is used is that the microporous plastic film 1 has the characteristics of being weak due to the presence of pores, having a high friction coefficient, and being easily wrinkled. The reason why the pinch rollers are pressed against both edges of the microporous plastic film 1 by the wrinkle removing unit 19 is that both edges are often excluded from products and that even when the pinhole 57 exists in both edges, there is no risk of the occurrence of a insulation failure fault or the like. The wrinkle removing unit 19 may be, other than the means that is in contact with both edges, any means that is in contact with a part serving as a product or the full width of the microporous plastic film 1. The roller-shaped wrinkle removing unit 19 conventionally has often used rubber at its surface. The inventors of the present invention have found out that the surface of the wrinkle removing unit 19 is preferably metal in view of preventing the creation of the pinhole 57. Examples of the wrinkle removing unit 19 having a metallic surface may include an aluminum slide type expanding roller manufactured by Toyo Kikai Co., Ltd.

In the apparatus for manufacturing a microporous plastic film roll as the present embodiment having the above constitution, the conveying rollers 2 or the near roller 3 and a touch roller 6 have the following features.

As for the conveying rollers 2, a side opposite the side being in contact with the plastic film 1 is in a noncontact state in a range being in contact with the conveying rollers 2. In other words, the apparatus for manufacturing a microporous plastic film roll as the present embodiment conveys the plastic film 1 by the conveying rollers 2 so that the opposite side is in a noncontact state in a range in which the side of the plastic film 1 being in contact with the conveying rollers 2 is in contact with the conveying rollers 2. In other words, the conveying rollers 2 in contact with one side of the microporous plastic film 1 convey the microporous plastic film 1 without using any conventional nip roller for the purpose of achieving grip. Because the microporous plastic film 1 is conveyed by the conveying rollers 2 so that the side of the microporous plastic film 1 opposite the side being in contact with the conveying rollers 2 is in a noncontact state, a conventional rubber nip roller is can be eliminated. Because of this, even by the presence of sharp foreign bodies such as metal interposed between the nip roller and the conveying roller or when the surface of the nip roller is inevitably rubber in order to ensure pressing performance in the width direction, there is no risk of producing many pinhole faults periodically in the microporous plastic film 1 through the compression of the foreign bodies stuck in the rubber.

In the present invention, at least one or more of these conveying rollers 2 may be made of rubber. Its film contact part to be in contact with the microporous plastic film 1 has a Vickers hardness of preferably 100 to 2,000 and has an arithmetic average roughness Ra of preferably 1.2 µm to 15 µm and more preferably 1.2 µm to 3.6 µm. In the present invention, the near roller 3 may also be made of rubber. Its film contact part to be in contact with the microporous plastic film 1 has a Vickers hardness of preferably 100 to 2,000 and has an arithmetic average roughness Ra of preferably 1.2 µm to 15 µm and more preferably 1.2 µm to 3.6 µm.

The film contact part of the conveying rollers 2 or the near roller 3 is preferably made of metal or ceramics having a Vickers hardness of 100 to 2,000. Because the film contact part of the conveying rollers 2 or the near roller 3 thus has a Vickers hardness of 100 to 2,000, there is no risk that sharp foreign bodies such as metallic dust may stick in the film contact part. Among these, more preferable are some metals or ceramics that are easy to be prepared and can be manufactured as a roller at low cost.

This can prevent many pinholes 57 from being created periodically in the microporous plastic film 1 also in the contact part with the conveying rollers 2 and the near roller 3.

The touch roller 6, which will be described in detail below, is not used when the near roller 3 is used. When using the touch roller 6 in place of the near roller 3, its Vickers hardness is definitely 100 to 2,000.

When the Vickers hardness is less than 100 in particular, foreign bodies such as metallic powder easily stick in the surface to produce the pinhole 57. For this reason, making the Vickers hardness 100 or more prevents metallic foreign bodies from sticking and can exclude the cause of pinholes. When the Vickers hardness exceeds 2,000, an extremely expensive surface treatment is required to be performed on the surface of the rollers, which is uneconomical in performing surface treatment on near rollers, nip rollers, conveying rollers, or the like.

Other than metal and ceramics, diamond-like carbon that forms organic coatings in a plasma atmosphere and metal nitrides are also preferable as materials for improving surface hardness.

The film contact part of the near roller 3 has an arithmetic average roughness Ra of 1.2 µm to 15 µm as schematically illustrated in FIG. 6. The arithmetic average roughness Ra is defined in JIS B0601 (2001). The arithmetic average roughness Ra is obtained by dividing the integral value of deviations from an average by a measurement length and is a concept close to the standard deviation of a roughness curve. For this reason, Ra takes a value that is a fraction of mountain heights of actual roughness.

The surface roughness of the film contact part may be achieved by any processing method. For example, it may be formed by cutting or component rolling. More preferably, shot blasting with glass beads, sand, or the like on a roller surface can control roughness. For ceramics, which is high in harness, a molten metal oxide may be attached to the film contact part by thermal spraying to achieve roughness when plastic working is difficult. It is also preferable to add polishing to the above processing to adjust the final roughness. Thermal spraying, blasting, and polishing may be appropriately combined with each other. It is still also preferable as illustrated in FIG. 6 to form roughness and then to add such functions as rustproofing and wear resistance with a surface coating 22 such as metal plating on a base material 23. When performing thermal spraying or plating, other than metal and ceramics, CFRP, resin, or the like may be selected as the base material. Because the arithmetic average roughness Ra of the film contact part of the conveying rollers 2 or the near roller 3 is 1.2 µm to 15 µm or because the grooves whose width is 0.5 mm to 3 mm are formed on the surface, even when the surface of the film contact part is formed of metal or ceramics, friction force comparable to conventional rubber is ensured, and while appropriately controlling tension and speed, the microporous plastic film 1 can be conveyed and wound with good appearance.

The grooves are preferably formed with a pitch similar to the groove width. The grooves, which may be formed in any direction, may be in the axial direction, the circumferential direction, or continuously in a slanting direction spirally. As for the depth of the grooves, 5 µm or more is sufficient, and considering easiness of processing, 0.5 mm or more is actually preferable. In contrast, as the grooves become too deep, foreign bodies easily accumulate. For this reason, the depth is preferably to be reduced to about 5 mm or less. As for the corner of the grooves, it is preferable to appropriately perform chamfering and curving (rounding) so as not to scratch the plastic film 1.

Specifically, the reason why the arithmetic average roughness Ra of the film contact part of the conveying rollers 2 or the near roller 3 is in a range of 1.2 µm to 15 µm is to prevent the microporous plastic film 1 from meandering.

It is air accompanying in between the near roller 3 and the microporous plastic film 1 that the inventors of the present invention have noted as the cause of the meandering. When conveying the microporous plastic film 1 by the near roller 3, air accompanies in between the microporous plastic film 1 and the near roller 3 caused by the viscosity of air in accordance with speed, and lubrication occurs therein. This reduces the contact area of the microporous plastic film 1, which has a relatively high friction coefficient in a contact state as described above, and reduces friction. For this reason, rollers having grooves formed on rubber having an even higher friction coefficient have often been used.

It is known in the microporous plastic film 1 that the accompanying air passes through the through holes 10 through pressure by tension. For example, when a contacting angle to the near roller 3 is about 180°, and particularly when the air permeability of the microporous plastic film 1 is 10 to 1,000 seconds/100 ml, air passes through the micropores of the microporous plastic film 1 in a range of several degrees to several tens of degrees of the upstream side contacting part. Consequently, in controlling tension and speed, even when the film contact part of the near roller 3 is a mirror-finished surface made of metal or ceramics, a necessary friction force can be ensured when a sufficient contacting angle is ensured.

However, it has been found out that when attention is focused on the "meandering" of the microporous plastic film 1 in particular, film traveling unsettles due to the lubrication of air to cause meandering, even if grip is achieved in the end.

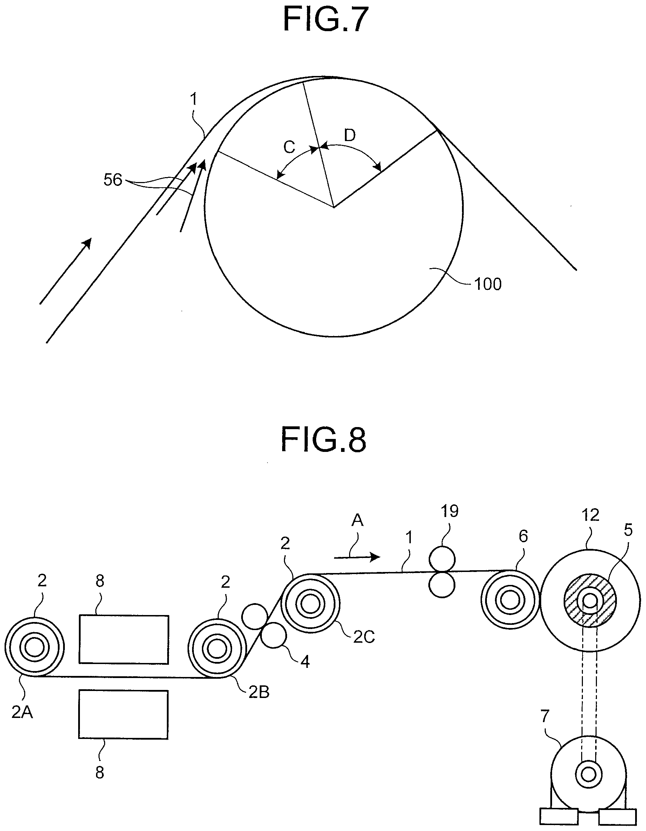

FIG. 7 is an illustrative diagram of a case in which conveying the microporous plastic film 1 by a roller 100 whose film contact part is a mirror-finished surface and is formed of metal or ceramics.

As illustrated in FIG. 7, although there is an air lubricating part C in the part where the microporous plastic film 1 enters the roller 100, air 56 passes through the through holes 10 through pressure by tension due to the air permeability from the micropores described above; this causes the air lubricating part C to transition to a contact region D. Thus, a friction force required for speed and tension control or to rotate a free roller is ensured by the contact region D even when using a hard material such as metal and ceramics for the surface of the roller 100.

However, in order to prevent the microporous plastic film roll 12 from meandering, the range of the air lubricating part C is required to be reduced as much as possible. When the microporous plastic film 1 floats at the entrance to the near roller 3, its travel direction unsettles and meanders. No matter how large friction force is achieved in the contact region D to grip it after that, the meandering that has already occurred cannot be corrected, because the microporous plastic film 1 that has already meandered travels straightforward as it is. The thickness of the air 56 accompanying in the air lubricating part C is determined by the speed and tension, the radius of the roller 100, and the viscosity of the air as described above.

In view of the above, the inventors of the present invention have found out that it is preferable that the arithmetic average roughness Ra of the film contact part of the near roller 3 is within a range of 1.2 µm to 15 µm, as a result of consideration from the conveyance speed and tension of the microporous plastic film roll 12.

When the arithmetic average roughness Ra is less than 1.2 µm, the roughness of the surface of the conveying rollers 2 or the near roller 3 is insufficient for the accompanying air (56 in FIG. 7), the range of the air lubricating part C increases, the contact between the microporous plastic film 1 and the near roller 3 is impaired, and the friction force remarkably decreases. Because of this, the meandering of the microporous plastic film 1 cannot be prevented.

When the arithmetic average roughness Ra exceeds 15 µm, it becomes difficult to perform surface processing on the film contact part of the near roller 3 made of ceramics or metal. This is not only expensive, but also reduces the contact area, thereby reducing the static friction force of the contact region D and causing meandering in the contact region D. In other words, because the microporous plastic film 1 has a larger range of the air lubricating part C than that of conventional pore-free plastic films caused by the lower tension as described above, the accompanying air is required to be excluded even with an arithmetic average roughness Ra of 15 µm. This is because it has been found out that the contact region D contributes to grip in the conveyance direction in the conveyance of the microporous plastic film 1.

Because the contact region D is ensured, the microporous plastic film 1 is conveyed by the conveying rollers 2 so that the side of the microporous plastic film 1 opposite the side being in contact with the conveying rollers 2 is in a noncontact state. This eliminates the need for using a conventional rubber nip roller and eliminates a risk of producing pinhole faults due to the presence of the nip roller. A roller with holes or grooves on a part of the conveying roller 2 that performs suction by giving negative pressure from within (generally called a suction roller) may be used as needed.

As for the conveying roller 2C in particular on the downstream side of the cutting unit 4 in the conveyance direction, if the film contact part to be in contact with the microporous plastic film 1 is of metal or ceramics and if the arithmetic average roughness Ra is 1.2 µm to 15 µm, the edge face position of the film roll 12 is determined by the cutting unit 4 even when the microporous plastic film 1 meanders on the upstream side of the cutting unit 4 in the conveyance direction. This prevents meandering from occurring on the side close to winding on the downstream of the cutting unit 4 because of the absence of the air lubricating part C due to the surface roughness being 1.2 µm to 15 µm and prevents disorder of the edge face of the film roll 12 while avoiding pinholes.

In the apparatus for manufacturing a microporous plastic film roll as the present embodiment, the conveying rollers 2A and 2B arranged on the upstream side of the cutting unit 4 may have a surface with a lower friction coefficient as needed. Specifically, metal plating coated with or mixed with a fluorine resin or a silicone resin may be applied to a moderately roughened surface. By thus reducing the friction coefficient, when the microporous plastic film 1 (the microporous plastic film 1 before being cut by the cutting unit 4) conveyed is wide, the microporous plastic film 1 can be prevented from being wrinkled.

As described above, the apparatus for manufacturing a microporous plastic film roll as the present embodiment conveys the microporous plastic film 1 so that the side of the microporous plastic film 1 opposite the side being in contact with the conveying rollers 2 is in a noncontact state, thereby reducing the creation of pinholes 57 by foreign bodies stuck in the surface of the conveying rollers 2 as compared to a case of using a conventional nip roller. The film contact part of the conveying rollers 2 or the near roller 3 or all of these rollers 2, 3 to be in contact with the microporous plastic film 1 has a Vickers hardness of 100 to 2,000, thereby eliminating a risk that sharp foreign bodies such as metallic dust may stick in the film contact part and preventing many pinholes 57 from being created periodically in the microporous plastic film 1. The film contact part of the conveying rollers 2 or the near roller 3 has an arithmetic average roughness of 1.2 µm to 15 µm, thereby preventing the microporous plastic film 1 from meandering.

Thus, the apparatus for manufacturing a microporous plastic film roll as the present embodiment can reduce the occurrence of pinhole faults and convey the microporous plastic film 1 favorably.

In particular, when all or a part of the conveying rollers 2 and the near roller 3 to be in contact with the microporous plastic film 1 is formed of metal or ceramics and has an arithmetic average roughness of 1.2 µm to 15 µm, pinhole faults can also be prevented from occurring even by the conveying rollers 2.

Although the preferable embodiment of the present invention has been described, the present invention is not limited to the embodiment, and various modifications may be made thereto.

In the present invention, as for the conveying rollers 2B, 2C on the downstream side of the pinhole fault detector 8 in the conveyance direction, the part to be in contact with the microporous plastic film 1 may be a material having appropriate roughness and Vickers hardness and may be preferably metal or ceramics. This can further reduce the risk of pinholes 57. For example, in FIG. 1, because the conveying rollers 2B, 2C and the near roller 3 are arranged on the downstream side of the pinhole fault detector 8 in the conveyance direction, the surface material of the conveying rollers 2B, 2C should be metal or ceramics. Because of this, if the material of the part of a roller on the upstream of the pinhole fault detector 8, that is, for example, the conveying roller 2A in FIG. 1 to be in contact with the microporous plastic film 1 is rubber, even when the pinhole 57 is created in that part, the pinhole 57 can be detected by the pinhole fault detector 8. Because of this, a product concern can be excluded in a later inspection process, and insulation failure faults can be prevented from occurring when incorporated into batteries or capacitors.

The above example describes the case of using the near roller 3. The present invention uses however the touch roller 6 in place of the near roller 3 as illustrated in FIG. 8.

The touch roller 6 is a unit for adjusting the wound appearance of the film roll 12 in contact with the microporous plastic film 1 more actively than the near roller 3 by adjusting the amount of air accompanying between the film roll 12 and the microporous plastic film 1 by pressing high edges caused by sections at the edges of the microporous plastic film 1.

Because the touch roller 6 presses the film roll 12 unlike the near roller 3, when there are sharp foreign bodies such as metallic powder, the risk of the creation of pinholes 57 increases momentarily. However, because the part of the touch roller 6 to be in contact with the microporous plastic film 1 has definitely a Vickers hardness of 100 to 2,000, foreign bodies such as metallic powder do not stick in the touch roller 6, thereby preventing many pinholes 57 from being created periodically. Because the arithmetic average roughness Ra of the touch roller 6 is 1.2 µm to 15 µm, the microporous plastic film 1 can be prevented from meandering. As a big difference between the touch roller 6 and a nip roller, both are required to have certain flexibility in order to follow deformation and film thickness variations, thereby making a pressing force in the width direction uniform. For this reason, as for the nip roller, either the conveying roller or the nip roller is required to be formed of rubber. Not the conveying roller connected to a driving system, but the nip roller, which is easy to detach and easy to maintain, is generally formed of rubber.

Because the touch roller 6 of the present invention presses the film roll 12 that winds the microporous plastic film 1, rubber is unnecessary due to the flexibility of the microporous plastic film 1. Because the material having a Vickers hardness of 100 to 2,000 as described above is used, many pinholes can be prevented from being created periodically.

By making the near roller 3 movable and allowing it to be used as the touch roller 6, the touch roller 6 can use the functions of both rollers selectively. In this case, the roller functions as both the near roller 3 and the touch roller 6, in which the surface of the touch roller 6 has definitely a Vickers hardness of 100 to 2,000.

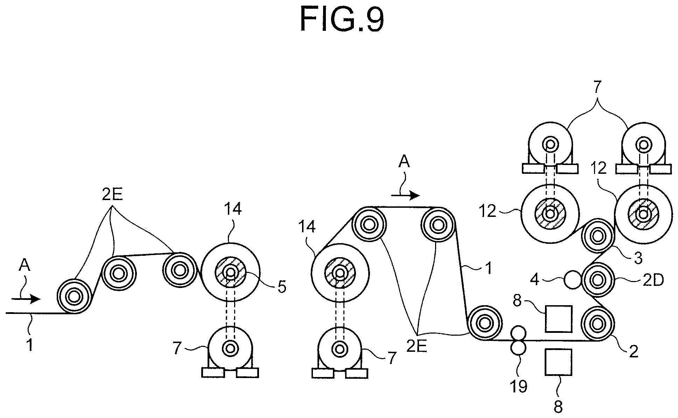

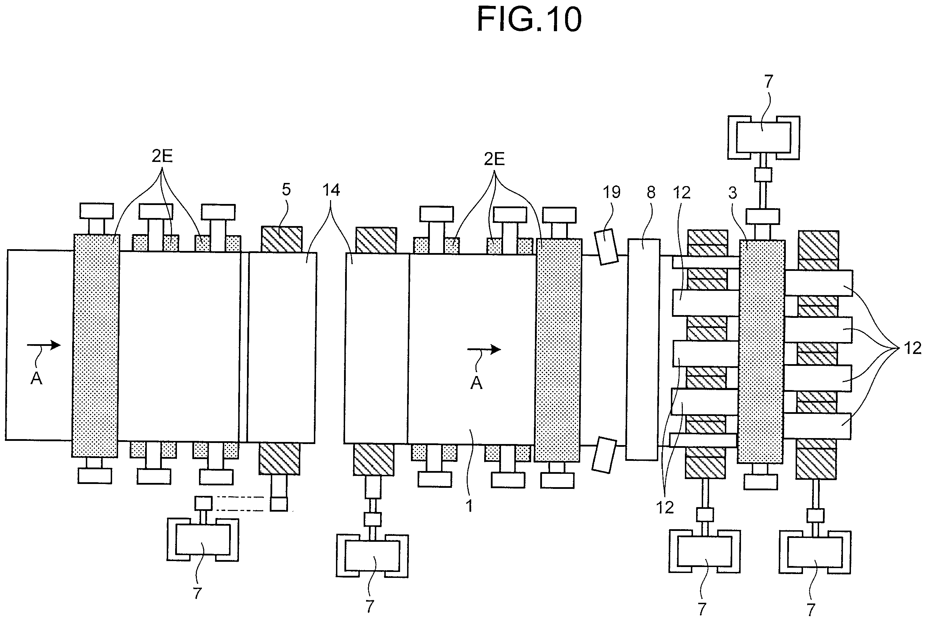

FIG. 9 and FIG. 10 are illustrative diagrams illustrating another modification of the apparatus for manufacturing a microporous plastic film roll as the present embodiment. As illustrated in FIG. 9 and FIG. 10, the microporous plastic film 1 may be conveyed by conveying rollers 2E in a wide manner to be wound as an intermediate product 14, be slit into a narrow width by the cutting unit 4 at a rewinder as the latter process, and be conveyed by a conveying roller 2D.

### Examples

The following describes results of microporous plastic film rolls for a secondary battery separator manufactured by the above apparatus for manufacturing a microporous plastic film roll.

### [Example 1]

The polypropylene microporous plastic film 1 formed with through holes 10 as illustrated in FIG. 2 and FIG. 3 by a biaxial stretching process after controlling a crystal structure of polypropylene was conveyed by a conveyance system having the pinhole fault detector 8 as illustrated in FIG. 1 and was wound continuously on the winding core 5 to manufacture the microporous plastic film roll 12. The air permeability of the microporous plastic film 1 was measured while passing 100 ml of air using a B type Gurley tester stipulated in Japanese Industrial Standards JIS P8117 at a temperature of 23°C and a humidity of 65%, and the result was 300 seconds. The cutting unit 4 of the shear-cutting type was arranged at some midpoint in the conveyance system to cut the microporous plastic film 1 into a width of 50 mm. The thickness of the microporous plastic film 1 was 30 µm.

Although not illustrated in FIG. 1, the conveying rollers 2 and the near roller 3 are all coupled to a belt and are rotatingly driven with their speeds controlled by a motor.

With a conveyance speed of 100 m/minute and a tension of 20 N/m, winding was performed while cutting into the above width at every winding length of 1,000 m.

The conveyance system did not include any nip roller, and the material of the part of the conveying rollers 2 and the near roller 3 to be in contact with the microporous plastic film 1 was ethylene propylene rubber (EPDM). The rubber showed no indentation by a Vickers hardness meter, and it was determined that its Vickers hardness was less than 100. As for a wrinkle removing unit, a wrinkle removing roller "Miravo Roll" manufactured by Mitsuhashi Corporation was used as the conveying roller 2C. The roller was brought into contact with the microporous plastic film 1 over the full width, and the material of the part to be in contact therewith was EPDM like the other conveying rollers.

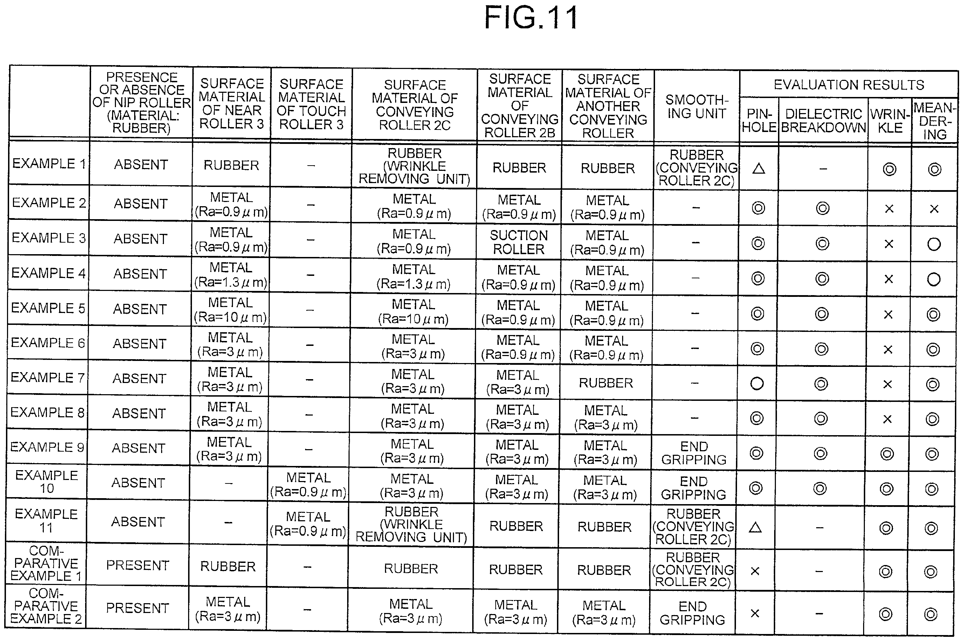

FIG. 11 lists the roller material and surface roughness of the part to be in contact with the microporous plastic film 1 and the presence or absence of the use of the wrinkle removing unit 19.

### [Example 2]

The material of the part of all the conveying rollers 2 including the conveying roller 2C and the near roller 3 to be in contact with the microporous plastic film 1 was metal made of hard chromium plating (hereinafter HCr). The Vickers hardness of the contact part of the near roller 3 was measured with a test load of 2 N based on Japanese Industrial Standards JIS Z2244, and the result was a value of 1,000. As for the surface roughness of the contact part (metallic surface) of the near roller 3, the arithmetic average roughness Ra was determined based on Japanese Industrial Standards JIS B0601 (2001) by a contact type surface roughness measurement machine manufactured by Mitutoyo Corporation with a probe material of diamond, a probe tip radius of 2 µm, and a measurement force of 0.75 mN, and the result was 0.9 µm. The Vickers hardness of the HCr part was measured by a measurement method described in JIS Z2244 (2009), and the result was 800. The wrinkle removing unit 19 illustrated in FIG. 1 was not used. The combination of these conditions is listed in FIG. 11.

### [Example 3]

The same microporous plastic film 1 as Example 1 was wound by the conveyance system in FIG. 1 at the same speed and tension conditions. The conveying roller 2C had many grooves on its surface and was a suction roller with its inside sucked by a blower. The suction pressure was -5 kPa. The material of the other conveying rollers 2 and the near roller 3 was HCr, and its arithmetic average roughness Ra was 0.9 µm like Example 2. The combination of these conditions is listed in FIG. 11.

### [Example 4]

The same microporous plastic film 1 as Example 1 was wound by the conveyance system in FIG. 1 at the same speed and tension conditions. The material of the conveying roller 2C and the near roller 3 on the downstream of the cutting unit 4 was HCr, and its arithmetic average roughness Ra was 1.3 µm. The material of the conveying rollers 2 on the upstream of the cutting unit 4 was Hcr, and its arithmetic average roughness Ra was 0.9 µm. The combination of these conditions is listed in FIG. 11.

### [Example 5]

The same microporous plastic film 1 as Example 1 was wound by the conveyance system in FIG. 1 at the same speed and tension conditions. The material of the conveying roller 2C and the near roller 3 on the downstream of the cutting unit 4 was HCr, and its arithmetic average roughness Ra was 10 µm, whereas the material of the conveying rollers 2 on the upstream of the cutting unit 4 was Hcr, and its arithmetic average roughness Ra was 0.9 µm. The combination of these conditions is listed in FIG. 11.

### [Example 6]

The same microporous plastic film 1 as Example 1 was wound by the conveyance system in FIG. 1 at the same speed and tension conditions. The arithmetic average roughness Ra of the conveying roller 2C and the near roller 3 on the downstream of the cutting unit 4 was 3 µm, whereas the arithmetic average roughness Ra of the conveying rollers 2 on the upstream of the cutting unit 4 was 0.9 µm. The combination of these conditions is listed in FIG. 11.

### [Example 7]

The same microporous plastic film 1 as Example 1 was wound by the conveyance system in FIG. 1 at the same speed and tension conditions. The material of the conveying rollers 2B, 2C and the near roller 3 on the downstream of the pinhole fault detector 8 was metal made of HCr, and its arithmetic average roughness Ra was 3 µm. The material of the surfaces of all the rollers on the upstream of the pinhole fault detector 8 was rubber. The combination of these conditions is listed in FIG. 11.

### [Example 8]

The same microporous plastic film 1 as Example 1 was wound by the conveyance system in FIG. 1 at the same speed and tension conditions. The material of all the conveying rollers 2 and the near roller 3 was HCr, and its arithmetic average roughness Ra was 3 µm like Example 6. The combination of these conditions is listed in FIG. 11.

### [Example 9]

The same microporous plastic film 1 as Example 1 was wound by the conveyance system in FIG. 1 at the same speed and tension conditions. The material of all the conveying rollers 2 and the near roller 3 was HCr like Example 8, and its arithmetic average roughness Ra was 3 µm. The wrinkle removing unit 19 to be in contact with only both edges of the microporous plastic film 1 was used. The combination of these conditions is listed in FIG. 11.

### [Example 10]

The same microporous plastic film 1 as Example 1 was wound by the conveyance system in FIG. 8 at the same speed and tension conditions. The material of the part of the touch roller 6 to be in contact with the microporous plastic film 1 was metal made of HCr, and its arithmetic average roughness Ra was 0.9 µm. The material of all the conveying rollers 2 was HCr, and its arithmetic average roughness Ra was 3 µm. In addition, the wrinkle removing unit 19 to be in contact with only both edges of the microporous plastic film 1 was used. The combination of these conditions is listed in FIG. 11.

### [Example 11]

The same microporous plastic film 1 as Example 1 was wound by the conveyance system in FIG. 8 at the same speed and tension conditions. The material of the part of the touch roller 6 to be in contact with the microporous plastic film 1 was metal made of HCr. The material of all the conveying rollers 2 was EPDM. The wrinkle removing unit made of rubber was used like Example 1.

### [Comparative Example 1]

The same microporous plastic film as Example 1 was wound by a conveyance system with a nip roller installed in a part of the conveyance system in FIG. 1 at the same speed and tension conditions. The material of the part of the near roller and the conveying rollers to be in contact with the microporous plastic film was EPDM rubber. In addition, Miravo Roll to be in contact with the full width of the microporous plastic film was used as the conveying rollers. The combination of these conditions is listed in FIG. 11.

### [Comparative Example 2]

The same microporous plastic film as Example 1 was wound by a conveyance system with a nip roller installed in a part of the conveyance system in FIG. 1 at the same speed and tension conditions. The material of the part of the near roller and the conveying rollers to be in contact with the microporous plastic film was metal made of hard chromium plating (HCr), and its arithmetic average roughness Ra was 3 µm. The combination of these conditions is listed in FIG. 11.

FIG. 11 lists results of microporous plastic film rolls for a secondary battery separator manufactured as Examples and Comparative Examples.

As for a method for determining "pinholes", a case in which a plurality of pinholes whose external dimension exceeded 50 µm optically detected by the pinhole fault detector 8 were present within a winding length of 200 mm was determined as "×," a case in which although no plurality of pinholes were present within 200 mm, any pinhole was detected during winding was determined as "○," and a case in which there was no pinhole was determined as "⊙."

As for a method for determining "insulation failure", only the film rolls determined as "○" by the pinhole inspection among the wound film rolls were selected, and a voltage was applied with 2 m apart on the surface layer thereof. A case in which discharge accompanied by a voltage of 1 kV or more when a current reached 50 mA was observed in three rolls or more among 10 rolls was determined as "×," a case in which the discharge was observed with a frequency of 3 rolls or less among 10 rolls was determined as "○," and other cases were determined as "⊙."

As for a method for determining "wrinkles" a case in which any wrinkle was observed in a wound film roll was determined as "×," and other cases were determined as "⊙."

As for a method for determining "meandering," a case in which the edge face of a wound film roll was not aligned over the entire periphery and a case in which there was quantitatively a disorder of 0.5 mm or more were determined as "×," a case in which there was a disorder of less than 0.5 mm was determined as "○," and other cases were determined as "⊙."

As listed in FIG. 11, although Example 1 produced a few pinholes because the surface of the conveying rollers 2 and the near roller 3 was rubber, the amount was reduced to a minimum due to the absence of a nip roller. Although a few wrinkles were observed because of the absence of the wrinkle removing unit, and a little meandering was observed because the roughness of the metal part of the surface of the near roller 3 was a little low, the appearance of the wrinkles was within tolerable limits.

Example 2 eliminated pinhole faults and was favorable in the number of insulation failure faults, because the conveying rollers 2 and the near roller 3 were metal. Meandering occurred, because the roughness of the film contact part (metallic part) was low.

Example 3 improved in reducing meandering by using the suction roller.

Example 4 improved in reducing meandering without a suction roller by increasing the roughness of the conveying roller 2C and the near roller 3 on the downstream of the cutting unit 4.

Example 5 eliminated meandering by optimizing the roughness of the conveying roller 2C and the near roller 3.

Example 6 eliminated meandering because of the roughness of the conveying roller 2C and the near roller 3 being in the optimum range.

Although Example 7 produced a few pinholes because of the conveying rollers 2 and the near roller 3 on the downstream of the pinhole fault detector 8 being metal, the produced pinholes were excluded, and insulation failure was able to be excluded. The roughness was in the optimum range, and meandering was eliminated.

Example 8 eliminated meandering because of the roughness of all the conveying rollers being in the optimum range.

Examples 9 and 10 achieved all of wrinkle prevention, and prevention of pinholes and insulation failure faults as a result of using the wrinkle removing unit that is in contact with only the edges of the film in place of the rubber wrinkle removing unit. Example 10 in particular, in which the near roller 3 was advanced to be used as the touch roller, showed no increase in pinholes and was favorable in insulation failure faults.

Example 11 produced a few pinholes, because rubber was used for the conveying rollers like Example 1. However, the creation of pinholes was reduced to a minimum, because the metallic touch roller 6 was used, and a nip roller was not used like Example 10.

Comparative Example 1 produced many pinholes due to the conveyance system including the conventional nip roller and rubber rollers.

Comparative Example 2 produced many pinholes like Comparative Example 1 due to the nip roller, although the material of the conveying rollers and the near roller was metal.

Thus, the present invention can manufacture a microporous plastic film roll excellent in insulating performance suitable to separators for secondary batteries without concern for wrinkles and meandering.

### Industrial Applicability

Without being limited to separators for secondary batteries, the present invention can be widely applied to, but not limited to, fields in which microporous plastic films can be used with strictly designed air permeability resistance such as separators for capacitors, other insulator films, and separation membranes.

### Reference Signs List

- 1: Microporous plastic film
- 12: Microporous plastic film roll
- 13: Separator
- 14: Intermediate product
- 19: Wrinkle removing unit
- 2: Conveying roller
- 2A: Conveying roller
- 2B: Conveying roller
- 2C: Conveying roller
- 22: Metallic surface coating
- 23: Roller base material
- 3: Near roller
- 4: Cutting unit
- 5: Winding core
- 6: Touch roller
- 7: Driving source
- 8: Pinhole fault detector
- 9: Fibril
- 10: Through hole
- 51: Lithium-ion secondary battery
- 54: Positive electrode
- 55: Negative electrode
- 56: Accompanying air
- 57: Pinhole
- A: Conveyance direction
- B: Film thickness direction
- C: Air lubricating part
- D: Contact region
- L: Film air travel distance

## Claims

1. An apparatus for winding a microporous plastic film roll (12), the apparatus comprising:
conveying rollers (2A, 2B, 2C) configured to convey a plastic film (1) having micropores, at least one of the conveying rollers (2A, 2B, 2C) whose film contact part to be in contact with the plastic film (1) has a Vickers hardness of 100 to 2,000, and an arithmetic average roughness Ra of 1.2 µm to 15 µm; and
a touch roller (6) whose film contact part to be in contact with the plastic film (1) has a Vickers hardness of 100 to 2,000, the touch roller (6) being brought into contact with the plastic film roll (12) while the plastic film (1) is wound in a roll shape,
wherein the conveying rollers (2A, 2B, 2C) convey the plastic film (1) so that a side of the plastic film (1) opposite the side being in contact with the conveying rollers (2A, 2B, 2C) is not in contact with nip rollers in ranges being in contact with the conveying rollers (2A, 2B, 2C), and
wherein the touch roller (6) is arranged downstream of the conveying rollers (2A, 2B, 2C).

2. The apparatus for winding a microporous plastic film roll (12) according to claim 1, comprising a pinhole fault detector (8) that detects a pinhole in a plastic film (1) conveyed, wherein
a film contact part of at least one of the conveying rollers (2B, 2C) on a downstream side of the pinhole fault detector (8) in a conveyance direction to be in contact with the plastic film (1) has an arithmetic average roughness of 1.2 µm to 15 µm and has a Vickers hardness of 100 to 2,000.

3. The apparatus for winding a microporous plastic film roll (12) according to claim 1 or 2, wherein the film contact part is of metal or ceramics.

4. The apparatus for winding a microporous plastic film roll (12) according to any one of claims 1 to 3, further comprising a wrinkle removing unit (19) that is in contact with only edges of the plastic film (1) conveyed to remove wrinkles formed on the plastic film (1) in a conveyance process.

5. The apparatus for winding a microporous plastic film roll (12) according to any one of claims 1 to 3, further comprising a wrinkle removing unit (19) that is in contact with a full width of the plastic film (1) conveyed to remove wrinkles formed on the plastic film (1) in a conveyance process, wherein
a part of the wrinkle removing unit (19) to be in contact with the plastic film (1) is of metal.

6. A method for winding a microporous plastic film roll (12), comprising:
conveying a plastic film (1) having micropores whose air permeability is 10 to 1,000 seconds/100 ml by conveying rollers (2A, 2B, 2C) so that a side of the plastic film (1) opposite the side being in contact with the conveying rollers (2A, 2B, 2C) is not in contact with nip rollers in ranges being in contact with the conveying rollers (2A, 2B, 2C), wherein a part of at least one of the conveying rollers (2A, 2B, 2C) to be in contact with the plastic film (1) has a Vickers hardness of 100 to 2,000, and arithmetic average roughness Ra of 1.2 µm to 15 µm, and
winding, after the conveying, the plastic film (1) in a roll shape being brought into contact with a touch roller, wherein
a part of the touch roller (6) to be in contact with the plastic film has a Vickers hardness of 100 to 2,000.

## Patentansprüche

1. Vorrichtung zum Aufwickeln einer mikroporösen Kunststofffolienrolle (12), wobei die Vorrichtung
Förderwalzen (2A, 2B, 2C) zum Fördern einer Kunststofffolie (1) mit Mikroporen, wobei mindestens eine der Förderwalzen (2A, 2B, 2C), deren Folienkontaktteil mit der Kunststofffolie (1) in Kontakt stehen soll, eine Vickers-Härte von 100 bis 2.000 und eine arithmetische durchschnittliche Rauheit Ra von 1,2 µm bis 15 µm hat; und
eine Berührungswalze (6) aufweist, deren Folienkontaktteil, der in Kontakt mit der Kunststofffolie (1) stehen soll, eine Vickers-Härte von 100 bis 2.000 hat, wobei die Berührungswalze (6) mit der Kunststofffolienrolle (12) in Kontakt gebracht wird, während die Kunststofffolie (1) in Rollenform aufgewickelt wird,
wobei die Förderwalzen (2A, 2B, 2C) die Kunststofffolie (1) so fördern, dass eine Seite der Kunststofffolie (1), die der Seite gegenüberliegt, die mit den Förderwalzen (2A, 2B, 2C) in Kontakt steht, nicht in Kontakt ist mit Andruckwalzen in Bereichen, die mit den Förderwalzen (2A, 2B, 2C) in Kontakt stehen, und
wobei die Berührungswalze (6) stromabwärts der Förderwalzen (2A, 2B, 2C) angeordnet ist.

2. Vorrichtung zum Aufwickeln einer mikroporösen Kunststofffolienrolle (12) nach Anspruch 1, die einen Lochfehlerdetektor (8) aufweist, der ein Loch in einer geförderten Kunststofffolie (1) detektiert, wobei
ein Folienkontaktteil mindestens einer der Förderwalzen (2B, 2C) an einer stromabwärtigen Seite des Lochfehlerdetektors (8) in einer Förderrichtung, der in Kontakt mit der Kunststofffolie (1) stehen soll, eine arithmetische durchschnittliche Rauheit von 1,2 µm bis 15 µm und eine Vickers-Härte von 100 bis 2.000 hat.

3. Vorrichtung zum Aufwickeln einer mikroporösen Kunststofffolienrolle (12) nach Anspruch 1 oder 2, wobei der Folienkontaktteil aus Metall oder Keramik besteht.

4. Vorrichtung zum Aufwickeln einer mikroporösen Kunststofffolienrolle (12) nach einem der Ansprüche 1 bis 3, die ferner eine Faltenentfernungseinheit (19) aufweist, die nur mit Kanten der geförderten Kunststofffolie (1) in Kontakt steht, um in einem Förderprozess auf der Kunststofffolie (1) gebildete Falten zu entfernen.

5. Vorrichtung zum Aufwickeln einer mikroporösen Kunststofffolienrolle (12) nach einem der Ansprüche 1 bis 3, die ferner eine Faltenentfernungseinheit (19) aufweist, die in Kontakt mit einer vollen Breite der geförderten Kunststofffolie (1) steht, um in einem Förderprozess auf der Kunststofffolie (1) gebildete Falten zu entfernen, wobei
ein Teil der Faltenentfernungseinheit (19), der mit der Kunststofffolie (1) in Kontakt stehen soll, aus Metall besteht.

6. Verfahren zum Aufwickeln einer mikroporösen Kunststofffolienrolle (12), umfassend:
Fördern einer Kunststofffolie (1) mit Mikroporen, deren Luftdurchlässigkeit 10 bis 1000 Sekunden/100 ml beträgt, durch Förderwalzen (2A, 2B, 2C), so dass eine Seite der Kunststofffolie (1), die der Seite, die mit den Förderwalzen (2A, 2B, 2C) in Kontakt steht, gegenüberliegt, nicht mit Andruckwalzen in Bereichen in Kontakt steht, die mit den Förderwalzen (2A, 2B, 2C) in Kontakt stehen, wobei ein Teil mindestens einer der Förderwalzen (2A, 2B, 2C), der in Kontakt mit der Kunststofffolie (1) stehen soll, eine Vickers-Härte von 100 bis 2.000 und eine arithmetische durchschnittliche Rauheit Ra von 1,2 µm bis 15 µm hat, und
Aufwickeln, nach dem Fördern, der Kunststofffolie (1) in eine Rollenform, indem sie in Kontakt mit einer Berührungswalze gebracht wird, wobei
ein Teil der Berührungswalze (6), der mit der Kunststofffolie in Kontakt stehen soll, eine Vickers-Härte von 100 bis 2000 hat.

## Revendications

1. Appareil pour enrouler une bobine de film plastique microporeux (12), l'appareil comprenant :
des rouleaux de transport (2A, 2B, 2C) configurés pour transporter un film plastique (1) ayant des micropores, au moins l'un des rouleaux de transport (2A, 2B, 2C) a une partie de contact de film devant être en contact avec le film plastique (1) ayant une dureté Vickers allant de 100 à 2000, et une rugosité moyenne arithmétique Ra allant de 1,2 µm à 15 µm; et
un rouleau de contact (6) dont la partie de contact de film devant être en contact avec le film plastique (1) a une dureté Vickers allant de 100 à 2000, le rouleau de contact (6) étant mis en contact avec la bobine de film plastique (12) tandis que le film plastique (1) est enroulé en forme de bobine,
dans lequel les rouleaux de transport (2A, 2B, 2C) transportent le film plastique (1) de sorte qu'un côté du film plastique (1) opposé au côté étant en contact avec les rouleaux de transport (2A, 2B, 2C) ne soit pas en contact avec des rouleaux pinceurs dans des plages qui sont en contact avec les rouleaux de transport (2A, 2B, 2C), et
dans lequel le rouleau de contact (6) est agencé en aval des rouleaux de transport (2A, 2B, 2C).

2. Appareil pour enrouler une bobine de film plastique microporeux (12) selon la revendication 1, comprenant un détecteur de défauts de piqûre (8) qui détecte une piqûre dans un film plastique (1) transporté,
dans lequel
une partie de contact de film d'au moins l'un des rouleaux de transport (2B, 2C) sur un côté aval du détecteur de défauts de piqûre (8) dans une direction de transport devant être en contact avec le film plastique (1) a une rugosité moyenne arithmétique allant de 1,2 µm à 15 µm et a une dureté Vickers allant de 100 à 2000.

3. Appareil pour enrouler une bobine de film plastique microporeux (12) selon la revendication 1 ou 2, dans lequel la partie de contact de film est en métal ou en céramique.

4. Appareil pour enrouler une bobine de film plastique microporeux (12) selon l'une quelconque des revendications 1 à 3, comprenant en outre une unité d'élimination de plis (19) qui est en contact uniquement avec les bords du film plastique (1) transporté pour éliminer les plis formés sur le film plastique (1) lors d'un processus de transport.

5. Appareil pour enrouler une bobine de film plastique microporeux (12) selon l'une quelconque des revendications 1 à 3, comprenant en outre une unité d'élimination de plis (19) qui est en contact avec une largeur totale du film plastique (1) transporté pour éliminer les plis formés sur le film plastique (1) lors d'un processus de transport,
où
une partie de l'unité d'élimination de plis (19) devant être en contact avec le film plastique (1) est en métal.

6. Procédé pour enrouler une bobine de film plastique microporeux (12), comprenant le fait :
de transporter un film plastique (1) ayant des micropores dont la perméabilité à l'air est de 10 à 1000 secondes/100 ml par des rouleaux de transport (2A, 2B, 2C) de sorte qu'un côté du film plastique (1) opposé au côté étant en contact avec les rouleaux de transport (2A, 2B, 2C) ne soit pas en contact avec des rouleaux pinceurs dans des plages qui sont en contact avec les rouleaux de transport (2A, 2B, 2C), où une partie d'au moins l'un des rouleaux de transport (2A, 2B, 2C) devant être en contact avec le film plastique (1) a une dureté Vickers allant de 100 à 2000, et une rugosité moyenne arithmétique Ra allant de 1,2 µm à 15 µm, et
d'enrouler, après le transport, le film plastique (1) en forme de bobine étant mis en contact avec un rouleau de contact, où
une partie du rouleau de contact (6) devant être en contact avec le film plastique a une dureté Vickers allant de 100 à 2000.
